Europäisches Patentamt

European Patent Office

Office européen des brevets

(11) Publication number: **0 079 470**
**A2**

(12) # EUROPEAN PATENT APPLICATION

(21) Application number: 82109618.7

(22) Date of filing: 18.10.82

(51) Int. Cl.³: **F 03 G 7/10**
**F 03 C 1/02**

(30) Priority: 19.10.81 ES 506348
26.04.82 ES 511707

(43) Date of publication of application:
25.05.83 Bulletin 83/21

(84) Designated Contracting States:
AT BE CH DE FR GB IT LI LU NL SE

(71) Applicant: Seva Molina, Norberto
Avda. Pino Montano 100-102
Sevilla-8(ES)

(72) Inventor: Seva Molina, Norberto
Avda. Pino Montano 100-102
Sevilla-8(ES)

(74) Representative: Prato, Roberto et al,
c/o Ingg. Carlo e Mario Torta Via Viotti 9
I-10121 Torino(IT)

(54) Hydraulic motor.

(57) Invention referring to a hydraulic motor based on the principle of pressure transmissions caused by a fluid, which is in this case oil under pressure.

The main features of the invention consist in the fact that of the two pistons having each a different cross-section, the smaller one undergoes a constant injection of fluid under pressure, thus having an infinite stroke.

The invention comprizes further a crankshaft, a feeding pump for the fluid under pressure fed in turn by public network or a storage battery, and actuated in operation by an electric motor which is built in. The fluid under pressure moves the crankshaft which in turn moves a shaft with eccentric components, opening and closing inlet and outlet valves for the fluid meant for the cylinders, which are actuated by freeing or compressing the injected fluid.

Appropriate devices arrange for the cutting out of the movements through switches or fluid locking contrivances.

FIG. 1

EP 0 079 470 A2

# HYDRAULIC MOTOR

The present invention concerns a hydraulic motor based on the principle of transmission of pressures inside a fluid.

As known, in a hydraulic presss with two pistons of different sections, the applying of a force to the piston having the smaller section causes this piston to exert a pressure upon the fluid, which is transmitted totally and in all directions inside said fluid. This implies the fact that the piston having a larger section is being pushed by said fluid with a strength which is proportional to its section. In other words the force issued by the larger section piston will be so much larger in regard to the force applied to the .cylinder with smaller section, as bigger the difference between the sections of .the two cylinders will be.

In the present invention the smaller piston is
replaced by a constant injection of fluid under pressure
produced by a hydraulic pump, thus obtaining that the
smaller piston has an endless run.

The basic point of this invention consists in the
fact of applying to a piston , which moves along a .
straight line due to a hydraulic pressure , and releases
a considerable strength, a crankshaft , so that the
force applied to the first piston is transformed in
the second one into a rotary movement applied through
a gear system, which allows a multiplying of the revolutions and turns the movement or action of the first
piston having a smaller section to a final rotary movement.

As obvious it is possible to apply to the contrivance
gearboxes, friction clutches or other known devices.

The basis of the present invention consists in
the following: through absorption of energy from a
storage battery or from the public network, the hydraulic
pressure pump is started, which incorporates an electric
motor. This pump injects a fluid under pressure into one
or more cylinders,equipped with inflow and outflow valves,
housing the relevant movable pistons. The injection of
the fluid under pressure causes the pistons setting in
motion the crankshaft. The latter moves the shaft
•setting in motion the eccentric cams through gears or

(2)

transmissions, thus opening or closing the 0079470
outflow valves for the fluid in the cylinders where the
pistons are housed, leaving in this way free or compressing
the fluid injected into sames.

One motor has been started, the storage battery
ceases to frøed automatically the electric power and
the energy necessary is now self-sufficient for the
operation of the hydraulic pump, through a pulley or
an electric generator or a dynamo, which will feed the
hydraulic pump motor  and compensate the waste of power
lost through the start of the electric storage battery.

In this way it is possible to produce a continuous
movement, which can be interrupted through cutting the
electric current, using to this effect a switch of the
generator or dynamo to the hydraulic pump, or a device
for stopping the flow of the fluid.

According to the present invention, the hydraulic
motor includes a pump feeding pressure oil, injected
selectively through a distributor into a series of
cylinders, inside each of which a displaceable piston
is housed, moved by the injected fluid. The different
pistons are connected through connecting rods to a
crankshaft, which actuates the pressure oil feeding pump.

The pump is initially moved, during the start
operations of the motor, by an electric motor fed from

(3)

the network of a storage battery.

The crankshaft controls further in its rotary movement, and through a set of gears, the position of the inflow and outflow cylinder valves, the stroke of such pistons being dephased in order to obtain at any moment that at least one of the pistons is in action.

According to the present invention, the cylinders of the motor are to be closed on the top through single plugs, which can move along a direction parallel to themselves between two limit positions i.e. one lower position on the engine block which seals hermetically the cylinder chambers, and an upper one in which the plugs are slightly apart from said block, so that the cylinder chamber remains open and in communication with the oil container, feeding the pump.

The position of each plug is controlled by a lever, which actuates it till its lower position or frees it for a movement towards the upper position, pushed by the pressure oil contained therein and fed by the relevant cylinder. The set of levers is assembled onto a shaft actuated through the crankshaft.

According to another feature of the invention, each of the cylinders of the motor includes at least a radial inlet above the uppermost position of the.

(4)

piston, through which pressure oil is fed by the pump. Possibly each cylinder is to dispose of two radial diametrically opposed inlets, thus entailing a larger feeding capacity.

The above mentioned inlets of each cylinder are controlled by a through valve actuated by the plug of each cylinder, so that when said plug is in its lower position, the valveopens the passage through the radial inlet and closes it when plug moves towards its upper position.

The above mentioned radial inlets are through ducts bored into the engine block, on the outside end of which a stiff piping is connected for the feeding of pressure oil.

Each through duct is crossed perpendicularly by a connection rod parallel to the cylinder axis and can move in axial direction. Thisnrod is to be connected at its upper end with the cylinder plug. The above rod is equipped with a diametrical hole located at the level of the through duct and in front of same when plug and hole are in their lower limit position, thus allowing the entry of the pressure oil. On the contrary, when the plug and the hole are moving towards the upper position, the diametrical .hole on the rod is no longer in front of the through

(5)

007947Q

duct, which is now sealed hermetically by the rod, stopping in this way the flow of pressure oil towards the cylinder chamber.

The motor covered by this invention can be built of a whatsoever material, with special reference to materials or alloys having a light weight and a notable strength.

As can be seen the energy consumed by the motor covered by this invention is reduced to the energy (electric current) absorbed at the start, and proceeding from a storage battery or a public network, as well as to the consumption of hydraulic oil due to the waste of same, so that the consumption of the motor covered by the invention can be considered as pratically null.

The principle on which the invention rests is based on the transmission of hydraulic pressures and the strength or result obtained from same shall depend on the number of pistons used as well as on the diameter of sames.

On the other hand the motor covered by the invention can include one or more pistons, with a whatsoever disposition and diameter, both in the case of working cylinders and of injectors. The pistons can be in line, , parallel, in V-shaped position, etc.

(6)

The building costs of the motor covered by the 0079470 invention are extremely reduced, due to the exiguous quantity of components thereof.

The applications of such a motor and of the invention covering it are unlimited, being in conditions to be used for the operation of a whatsoever kind of machine, as e.g. different types of vehicles, for land, sea and air transport, industries and any kind of machines.

Another advantage of the motor is in its totally silent operation, its dependability and in the practical absence of any danger of breakdowns. On the other hand the motor is causing no pollution at all, because polluting gases are not expelled from it . Finally it is not combustible in case of accident.

In order to illustrate better the structure, features and advantages of the motor covered by the invention, the same is now being described with more details, with reference to the enclosed drawings, with possible embodiments thereof, which are submitted as examples without any possible limitation.

We have:

Fig.1 is a perspective view of the motor covered by the invention.

Fig.2 is a plan view of the motor with the upper plug partially in section.

(7)

Fig.3 is a cross-section following line 3-3 of the figure 2.

Figure 4 is a cross-section following line 4-4 of the figure 2.

Figures 5 and 6 represent a mechanical system for the movement of the contrivance, replacing the electrical system appearing on figure 2.

In the case of enclosed drawings there appears on them a four cylinder motor, the cylinders being marked 1, in each of which a relevant piston 2 is housed. Their strokes are dephased between them so that at any moment one piston is in working position. Pistons 2 are connected by connecting rods 3 to the crakshaft 4, which can bear at one of its ends a flywheel 5, and at one or both ends a take-off.

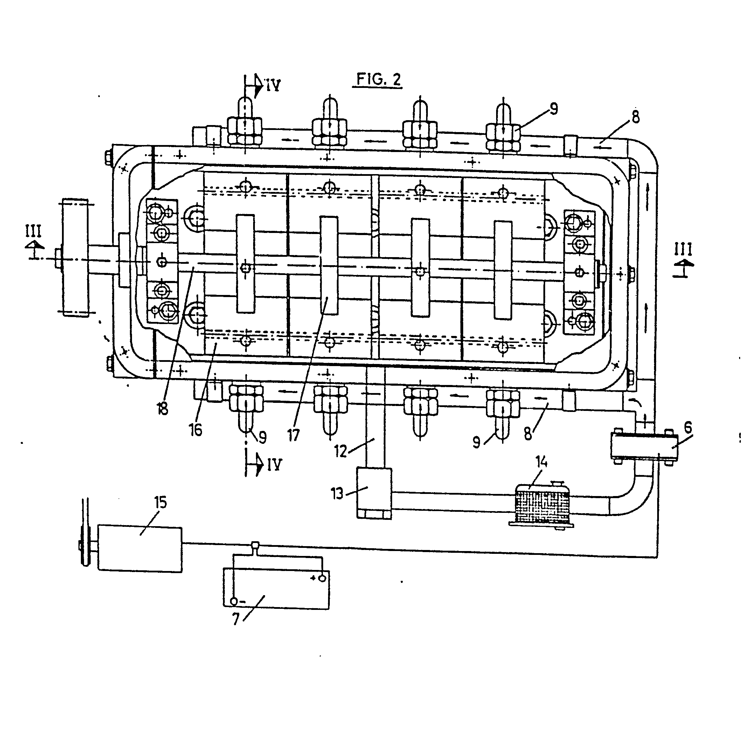

As can be better observed on figure 2, the motor comprizes a pump 6 which feeds pressure oil. This pump can be actuated by an electric motor fed initially by a storage battery 7 or by the public network. The fluid from pump 6 flows through the duct 8 and reached the stiff pipes 9, representing cylinder inlets.

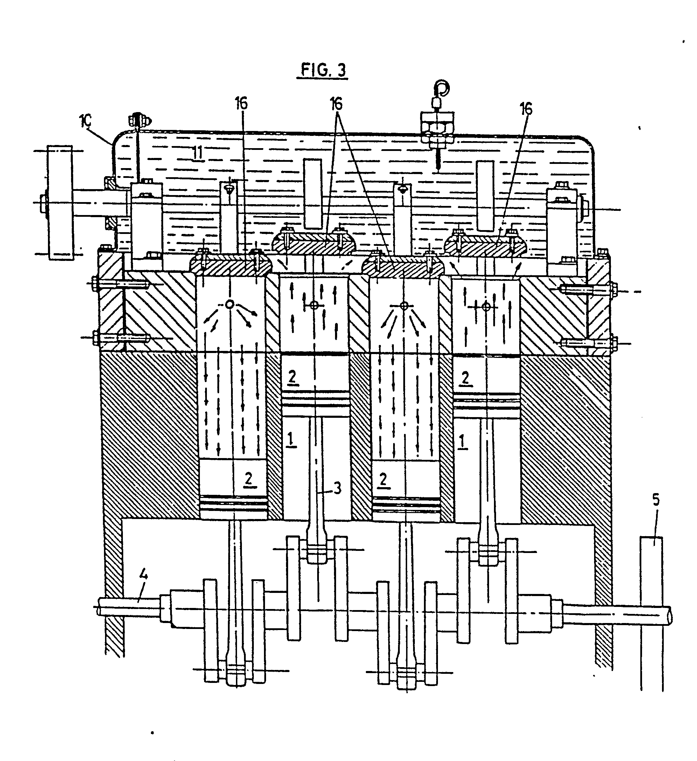

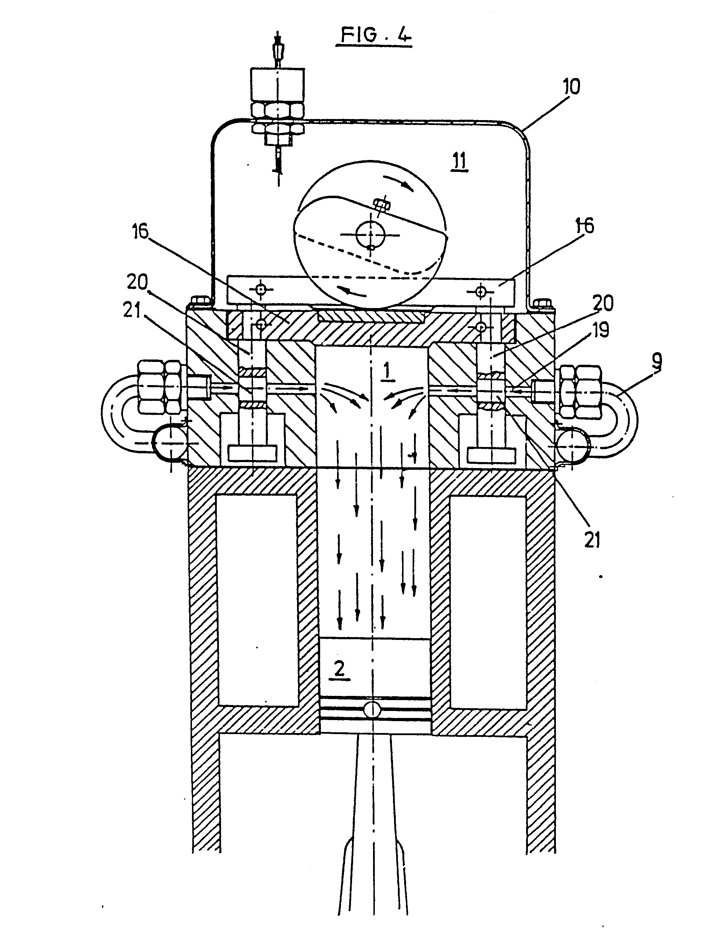

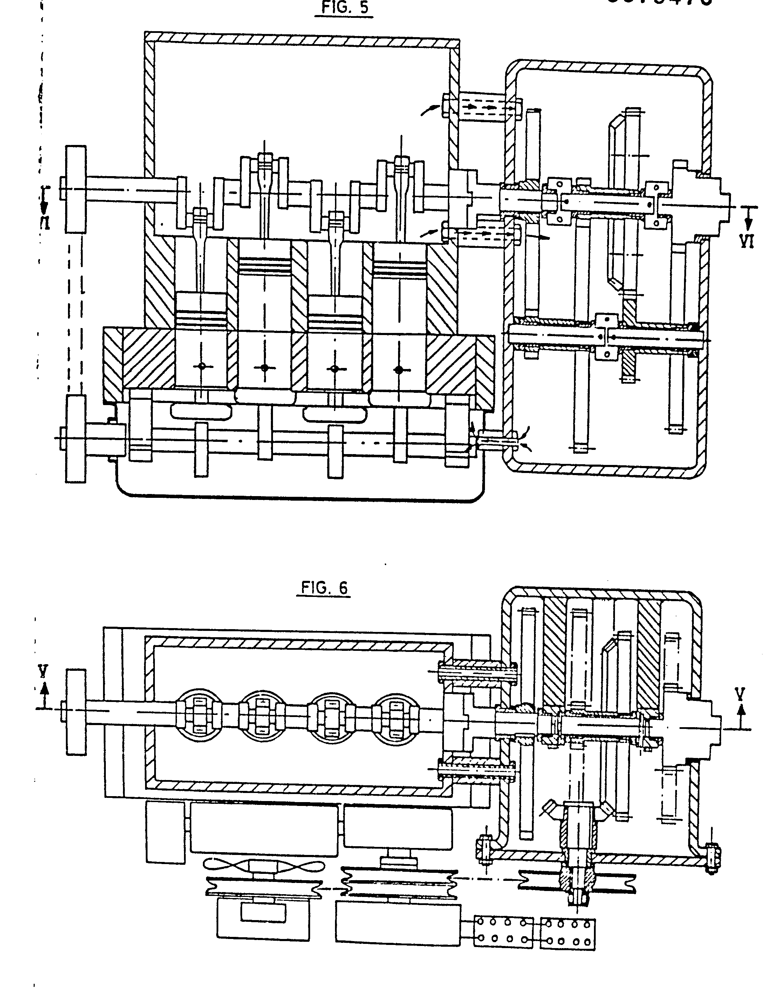

As can be better seet on figures 3 and 4, the motor is closed in its upper portion by a plug 10 defining a chamber 11, reached by the above fluid arriving from cylinders 1. Oil flows out of 11 through 'uuct 12 crossing strainer 13 and radiator 14 and finally reaching the suction side of pump 6.

When motor reaches the stage of normal operation the feeding of battery 7 is automatically cut out and generator 15 starts functioning, being actuated from crankshaft 4 of hydraulic motor , the generator of which feeds the necessary current for feeding the motor of the pump 6. As can be easily understood, it would be possible to suppress generator or dynamo 15, because pump 6 is directly operated from the crankshaft 4, through an appropriate transmission device (figures 5 and 6).

According to the present invention, each of the cylinders 1 is to be closed on the top by a plug 16 which can move parallelly to itself between the limit positions: a lower one in which it rests upon the block and seals hermetically the cylinder chamber 1, and an upper one in which it remains apart from the motor block thus allowing the cylinder chamber 1 to remain in communication with the oil container 11.

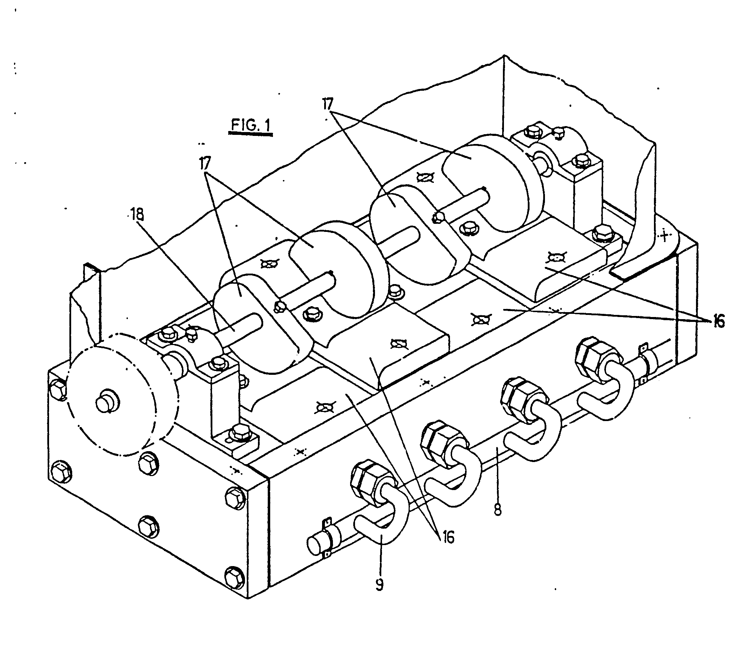

As can be seen on figure 1, on each of the plugs 16 rests a lever 17 having an appropriate shape for pushing the plugs towards their locking position or towards a position where they are free , so that they are lifted up to their upper limit position by the pressure oil

(9)

contained in the cylinder. All the levers 17 are to be
assembled on a shaft 18 operated through the crankshaft
of the motor.

As can be observed on figure 4, two radial through
ducts 19 are disemboguing into each of the cylinders 1,
being diametrically opposed between them. Stiff pipes
or tubes 9 are fixed to the outlet of such ducts. Ducts
19 are crossed by a rod or bolt (pin) 20 parallel to the
cylinder axis with a possibility of axial displacement.
Such rods or pins are fixed by their upper end to the relevant
plug 16, being displaced by the movement of said plug.

Each of the studs 20 avails itself of a diametrical
hole 21 placed in such a way that when stud 20 reaches
its lower limit position corresponding to the seat of
the plug 16 on the block, the diametrical hole 21 finds
itself in line with the duct 19, thus allowing the
flowing through of the fluid under pressure towards the
chamber of cylinder 1. On the contrary, when plug 16 moves
upwards, the diametrical hole is no longer in line with
duct 19, which is then sealed by rod 20, cutting out
the flow of fluid under pressure towards cylinder chamber.

By modifying in accordance with the present
invention the direction and number of injectors, one
obtains the doubling of the fluid under pressure
feeding each cylinder , so as to obtains a higher

(10)

displacement speed of the piston and a swifter velocity of the motor in operation.

The new kind of valves applied in the present invention permits to establish the distance and pressure of closing, thus increasing the affidability and good functioning due to the absence of risks of leaks of the pressure fluid.

Once the features of the present invention have been sufficiently described hereinbefore, together with the way of practically realizing the contrivance in question, it must be emphasized that the arrangements mentioned before may undergo some minor modifications without altering the basic principle on which the invention rests.

CLAIMS

1. Hydraulic motor, characterized by the fact that it comprizes a pressure oil feeding pump with selective injection through a distributing device to a set of cylinders in each of which there is a piston movable through the action of the injected fluid, all pistons being connected by appropriate rods to a crankshaft controlling the pressure oil feeding pump, also defining an external take-off, this pump being started during the setting in motion of the motor, by an electric motor fed from the public network or from a storage battery, the crankshaft also controlling through a set of gears the position of the inlet and outlet valves of the cylinders and being dephased in regard to the stroke of the pistons of said cylinders in order to obtain at any moment that at least one of the pistons is in working position.

2. Motor according to claim 1, characterized by the fact that the feeding of the mentioned electric motor from the public network or a storage battery is automatically cut out upon the motor reaching its normal functioning conditions, it being from then onwards self-fed by a generator or actuated by the motor crankshaft through an appropriate device.

3. Motor according to the claim 1, characterized by

(12)

the fact that the cylinders disembogue through an exit valve into an upper chamber connected with the inlet or suction side of the pump.

4.    Motor according to the claim 1, characterized by the fact that cylinders are closed on the top by plugs (one for each) moving in a direction parallel to the cylinder axis between two limit positions, a lower one in which they rest on the block and seal hermetically the cylinder chamber, and an upper one  slightly away from said block, so as to allow  a communication between the ajar chamber  of the cylinders and the oil container, each cylinder being supplied with at least one radial inlet, placed above the maximum upper position of the piston, through which pressure oil is being injected from the pump, the inlet of which is controlled by a through valve actuated by the plug of each cylinder , so that  when said plug is in its lower position, the  valve opens flow through radial inlet and closes it when plug is moving towards its upper position, each plug being controlled by a lever, all assembled on a common shaft actuated from the crankshaft.

5.    Moto · according to the claim 4, characterized by the fact that each of the cylinders is supplied with two radial inlets, diametrically opposed and equipped with a through

valve each.

(13)

6. Motor according to claims 4 and 5, characterized
by the fact that the above mentioned radial inlets end
outside the block, being there connected with the duct
feeding the pressure oil.

7. Motor according to the claims 4 and 5 and 6,
characterized by the fact that the radial inlets are
a through duct, crossed perpendicularly by a radially
displaceable rod, which runs parallel to the cylinder
axis and is connected by its top to the cylinder plug
whilst it disposes of a diametrical hole, facing the
through duct when plug and rod are in their lowest position,
the uppermost position of same causing the sealing
of said duct by the rod.

8. Motor according to claim 4, characterized by the
fact that levers have an appropriate profile and are
arranged between them in such a way that they push
the plugs towards the lower closing position or free
said plugs, following the stroke of the pistons.

FIG. 1

0079470

- 1/5-

0079470

FIG. 2

FIG. 3

FIG . 4

FIG. 5

FIG. 6